(19) Europäisches Patentamt
European Patent Office
Office européen des brevets

(11) **EP 4 428 992 A1**

(12) **EUROPEAN PATENT APPLICATION**
published in accordance with Art. 153(4) EPC

(43) Date of publication:
**11.09.2024 Bulletin 2024/37**

(21) Application number: **21965082.7**

(22) Date of filing: **24.11.2021**

(51) International Patent Classification (IPC):
**H01M 50/102** (2021.01)   **H01M 50/172** (2021.01)
**H01M 50/204** (2021.01)   **H01M 10/613** (2014.01)

(52) Cooperative Patent Classification (CPC):
**H01M 50/102;** H01M 10/613; H01M 50/172;
H01M 50/204; Y02E 60/10

(86) International application number:
**PCT/CN2021/132869**

(87) International publication number:
**WO 2023/092344 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• XU, Hu
  Ningde, Fujian 352100 (CN)
• JIN, Haizu
  Ningde, Fujian 352100 (CN)
• ZHAO, Fenggang
  Ningde, Fujian 352100 (CN)
• HUANG, Siying
  Ningde, Fujian 352100 (CN)

(74) Representative: **Gong, Jinping
CocreateIP
Neumarkterstr. 21
81673 München (DE)**

(54) **BATTERY CELL, BATTERY, ELECTRIC APPARATUS, AND METHOD AND APPARATUS FOR PREPARING BATTERY CELL**

(57) Embodiments of this application provide a battery cell, a battery, an electric apparatus, and a preparation method and device of battery cell. The battery cell includes: a hexahedral housing, where the hexahedral housing has a first wall and a second wall oppositely arranged, the first wall is provided with a positive electrode terminal, and the second wall is provided with a negative electrode terminal; and a cylindrical electrode assembly arranged in the housing, where the axial direction of the cylindrical electrode assembly is perpendicular to the first wall or the second wall, a positive electrode tab of the cylindrical electrode assembly is arranged at a first end of the cylindrical electrode assembly and connected to the positive electrode terminal, and a negative electrode tab of the cylindrical electrode assembly is arranged at a second end of the cylindrical electrode assembly and connected to the negative electrode terminal. The battery cell provided in this application can reduce the heat diffusion of the battery cell in a case of thermal runaway, improve the safety of the battery cell, and prolong the service life of the battery.

FIG. 4

## Description

## TECHNICAL FIELD

This application relates to the field of battery technologies, and in particular to a battery cell, a battery, an electric apparatus, and a preparation method and apparatus of battery cell.

## BACKGROUND

With the development of battery technologies, batteries, as important energy conversion devices, have been widely used in fields such as electronic devices and transportations, and the safety and service life of batteries have increasingly become the focus of battery technologies.

Batteries are typically assembled from a plurality of battery cells, and the service life and safety performance of batteries are directly affected by the battery cells. Thermal runaway of the electrode assembly in the battery cell can easily cause thermal runaway of other electrode assemblies through heat conduction. Thermal runaway of the battery cell directly affects the service safety and life of the battery. Therefore, how the safety performance and service life of battery cells are improved is a technical problem to be resolved urgently.

## SUMMARY

This application provides a battery cell, a battery, an electric apparatus, and a preparation method and apparatus of battery cell, which can reduce the heat diffusion of the battery cell in a case of thermal runaway, improve the safety of the battery cell, and prolong the service life of the battery.

According to a first aspect, a battery cell is provided, including: a hexahedral housing, where the hexahedral housing has a first wall and a second wall oppositely arranged, the first wall is provided with a positive electrode terminal, and the second wall is provided with a negative electrode terminal; and a cylindrical electrode assembly, where the cylindrical electrode assembly is arranged in the housing, the axial direction of the cylindrical electrode assembly is perpendicular to the first wall or the second wall, a positive electrode tab of the cylindrical electrode assembly is arranged at a first end of the cylindrical electrode assembly and connected to the positive electrode terminal, and a negative electrode tab of the cylindrical electrode assembly is arranged at a second end of the cylindrical electrode assembly and connected to the negative electrode terminal.

In the technical solution of this embodiment of the application, six walls of the hexahedral housing are divided into adjacent walls and oppositely arranged walls, the cylindrical electrode assembly is used in the hexahedral housing, and the positive electrode tab and the negative electrode tab of the cylindrical electrode assembly are respectively connected to the positive electrode terminal and the negative electrode terminal on the two oppositely arranged walls of the hexahedral housing, such that the positive electrode and the negative electrode of the hexahedral-shaped battery cell can be led out from the oppositely arranged two walls, and such arrangement of the hexahedral housing and the cylindrical electrode assembly reduces the contact area between the electrode assembly and the housing. Under the condition that the electrode assembly undergoes thermal runaway, the heat transfer between the electrode assembly and the housing depends on only a position where the cylinder is tangent to the hexahedron, which reduces the heat diffusion of the electrode assembly, thereby reducing the possibility of thermal runaway of one battery cell triggering thermal runaway of the plurality of battery cells, improving the safety performance of the battery cells, and prolonging the service life of the battery. In addition, the tabs of the cylindrical electrode assembly are respectively connected to the electrode terminals on the oppositely arranged first wall and second wall at the two ends of the cylinder, with no need to wind the tabs around other walls, thereby improving the internal space utilization of the battery cell. The tabs of the cylindrical electrode assembly are arranged at the two ends of the cylinder, so there is no need for die cutting and winding alignment during processing, which effectively improves the production efficiency of the battery cell and reduces the manufacturing cost; and in addition, in addition to accommodating the cylindrical electrode assembly, the hexahedral housing also has remaining space, where the gas generated by the electrode assembly in the electrochemical reaction can be stored, preventing the gas from causing bulges or damage to the battery cells and in turn causing safety problems, and improving the safety performance of the battery cell.

In a possible implementation, the positive electrode tab is connected to the positive electrode terminal through a first connector, and the negative electrode tab is connected to the negative electrode terminal through a second connector.

In the technical solution of this embodiment, the tabs are connected to the electrode terminals through the connectors. The connectors can electrically connect the tabs to the electrode terminals with no need of welding, which facilitates the production and processing of the battery cell. Moreover, the positive and negative electrode tabs of the cylindrical electrode assembly are respectively arranged at the two ends of the cylinder, and the electrode terminals are also respectively arranged on oppositely arranged walls of the hexahedral housing, which shortens the transfer distance of the connectors, thereby reducing the space occupied by the connectors and improving the internal space utilization of the battery cell.

In a possible implementation, the battery cell includes a plurality of cylindrical electrode assemblies, where the plurality of cylindrical electrode assemblies are arranged in parallel in the hexahedral housing along a first direction, and the first direction is parallel to the first wall.

In the technical solution of this embodiment, the plurality of cylindrical electrode assemblies are arranged in the battery cell, and cylindrical electrode assemblies are arranged in parallel along the direction parallel to the first wall, to be specific, the plurality of cylindrical electrode assemblies in the hexahedral housing are not stacked in the first direction, such that the electrode assemblies are relatively consistently infiltrated in the electrolyte under the condition that the cylindrical electrode assemblies are placed with their axes parallel to the horizontal plane, which improves the consistency of the electrode assemblies, thereby improving the electrochemical performance of the battery cell. In addition, the plurality of electrode assemblies are arranged in parallel, such that the contact areas between the cylindrical electrode assemblies and between each cylindrical electrode assembly and the housing are all relatively small. Therefore, under the condition that one electrode assembly undergoes thermal runaway, the heat diffusion is relatively small and the heat is not easy to transfer from one electrode assembly to another electrode assembly, which causes thermal runaway of the battery cell, improving the safety performance of the battery cell, and prolonging the service life of the battery.

In a possible implementation, the housing includes a shell and an end cover, where the shell has at least one opening, the end cover covers the opening, and the first wall and/or the second wall is the end cover.

Preferably, the first wall and the second wall are both the end covers, which are arranged at two ends of the shell.

In the technical solution of this embodiment, the oppositely arranged first wall and second wall in the six walls of the hexahedral housing are both the end covers, and the remaining four walls surround the shell with upper and lower openings, to be specific, the housing has two oppositely arranged end covers, and the positive and negative electrodes of the hexahedral-shaped battery cell are led out from two oppositely arranged surfaces, which can directly connect poles of the battery cell in a direction perpendicular to the end covers, with no need for busbar, thereby reducing the space for assembling the battery cell in the direction perpendicular to the end covers and helping to improve the internal space utilization of the battery.

In a possible implementation, the shell includes a side wall and a bottom wall, where the side wall and the bottom wall are arranged adjacent to each other, and the bottom wall is a wall with a largest area of the shell.

In the technical solution of this embodiment, the wall with the largest area in the shell of the battery cell is the bottom wall, in other words, the battery cell is assembled in the battery in a flat mode, and under such arrangement state, the axial direction of the cylindrical electrode assembly is parallel to the bottom wall, that is, the axial direction of the cylindrical electrode assembly is parallel to the horizontal plane. Under the condition that a plurality of cylindrical electrode assemblies exist, the electrode assemblies are arranged in parallel without stacking, which helps to improve the consistency of the electrode assemblies.

In a possible implementation, the cylindrical electrode assembly includes a positive electrode plate, a negative electrode plate, and a spacer structure arranged between the positive electrode plate and the negative electrode plate, where the spacer structure is configured to construct a spacer between the positive electrode plate and the negative electrode plate, and the spacer is configured to absorb expansion deformation of the cylindrical electrode assembly.

In the technical solution of this embodiment, the spacer structure is arranged between the electrode plates of the cylindrical electrode assembly, and the spacer structure can form a reserved space between the electrode plates in the process of winding the electrode plates into the cylindrical electrode assembly. Therefore, after the electrode assembly expands and deforms in the electrochemical reaction, the reserved space can accommodate the expansion of the electrode assembly, such that the cylindrical electrode assembly can expand inward, which reduces the degree of outward expansion of the electrode assembly and reduces the influence of the expansion and deformation of the electrode assembly on the shell. In this way, there is no need to use any additional end plates on the bottom wall and top wall of the shell to enhance the strength of the battery cell, thereby reducing the manufacturing cost of the battery cell while improving the stability and safety of the battery cell.

In a possible implementation, length h of the shell in the axial direction and length t of the shell in a second direction satisfy the following formula:

$$h = n \times t'$$

where n is the number of cylindrical electrode assemblies, $n \geq 1$, $t' = t +/- 20$ mm, and the second direction is perpendicular to the axial direction and the first direction.

In a possible implementation, diameter D of the cylindrical electrode assembly satisfies the following formula:

$$D = t - c1$$

where t is the length of the shell in the second direction, and $0.01$ mm $\leq c1 \leq 5$ mm.

In a possible implementation, the length of the shell in the first direction is 150 mm to 1200 mm.

According to a second aspect, a battery is provided, including a plurality of the battery cells according to any one of the first aspect or the possible implementations of the first aspect, where the box is configured to accommodate the plurality of battery cells.

In the technical solution of this embodiment, the battery is assembled from battery cells that can reduce heat diffusion and improve safety performance, which helps to avoid heat diffusion of the battery and improve safety performance of the battery.

In a possible implementation, a first battery cell and a second battery cell in the plurality of battery cells are arranged along the axial direction, and a negative electrode terminal of the first battery cell is connected to a positive electrode terminal of the second battery cell.

In the technical solution of this embodiment, because the positive and negative electrode terminals of the hexahedral-shaped battery cell are located on the two oppositely arranged end faces, the battery cells in the battery can be directly connected to the electrode terminals along the axial direction, that is, along the direction perpendicular to the end cover, which eliminates the busbars between the battery cells in the axial direction and improves the internal space utilization of the battery.

In a possible implementation, a first battery cell and a second battery cell in the plurality of battery cells are arranged in the box along the second direction.

In the technical solution of this embodiment, the battery cells are arranged in the second direction, that is, the plurality of battery cells are stacked with each other through the wall with the largest area, such that more battery cells can be accommodated in the battery, improving the internal space utilization of the battery.

In a possible implementation, the battery includes a water cooling plate arranged inside the box and attached to a third wall of the battery cell, where the third wall is parallel to the axial direction and connected to the first wall and the second wall.

In the technical solution of this embodiment, it should be understood that the third wall may be the bottom wall or the top wall of the shell, or may be the side wall of the shell. Preferably, the water cooling plate is attached to the top wall or bottom wall of the battery cell, that is, the wall with the largest area, so as to increase the contact area between the water cooling plate and the battery cell, which improves the cooling effect of the water cooling plate on the battery, avoids the safety problems caused by an excessively high temperature of the battery cell, and helps to improve the safety performance and service life of the battery.

In a possible implementation, length H of the box in the second direction satisfies the following formula:

$$H-c=m\times t$$

where m is the number of layers of the plurality of battery cells arranged along the second direction, t is the length of the shell in the second direction, $10\ \mathrm{mm}\leq c\leq40\ \mathrm{mm}$, and $1\leq m\leq8$.

According to a third aspect, an electric apparatus is provided, including the battery according to any one of the second aspect or the possible implementations of the second aspect, where the battery is configured to supply power to the electric apparatus.

According to a fourth aspect, a preparation method of battery cell is provided, including: providing a hexahedral housing, where the hexahedral housing has a first wall and a second wall oppositely arranged, the first wall is provided with a positive electrode terminal, and the second wall is provided with a negative electrode terminal; providing a cylindrical electrode assembly, where the cylindrical electrode assembly is arranged in the housing, the axial direction of the cylindrical electrode assembly is perpendicular to the first wall or the second wall, a positive electrode tab of the cylindrical electrode assembly is arranged at a first end of the cylindrical electrode assembly and connected to the positive electrode terminal, and a negative electrode tab of the cylindrical electrode assembly is arranged at a second end of the cylindrical electrode assembly and connected to the negative electrode terminal; and installing the cylindrical electrode assembly in the hexahedral housing.

According to a fifth aspect, a preparation apparatus of battery cell is provided, including: a providing module configured to: provide a hexahedral housing, where the hexahedral housing has a first wall and a second wall oppositely arranged, the first wall is provided with a positive electrode terminal, and the second wall is provided with a negative electrode terminal; and provide a cylindrical electrode assembly, where the cylindrical electrode assembly is arranged in the housing, the axial direction of the cylindrical electrode assembly is perpendicular to the first wall or the second wall, a positive electrode tab of the cylindrical electrode assembly is arranged at a first end of the cylindrical electrode assembly and connected to the positive electrode terminal, and a negative electrode tab of the cylindrical electrode assembly is arranged at a second end of the cylindrical electrode assembly and connected to the negative electrode terminal; and an installation module configured to install the cylindrical electrode assembly in the hexahedral housing.

Based on the technical solutions of the embodiments of this application, the cylindrical electrode assemblies are configured in the battery cell with the hexahedral housing, and the cylindrical electrode assemblies are not stacked in the hexahedral housing, such that the contact areas between the cylindrical electrode assemblies and the housing and between the cylindrical electrode assemblies are relatively small, which effectively controls the heat diffusion of the electrode assemblies in a case of thermal runaway, improves the safety performance of the battery cell, and prolongs the service life of the battery. In addition, such design can also make the electrode terminals of the battery cell with the hexahedral housing arranged on two oppositely arranged walls, the electrode terminals inside the battery cell can be directly connected to the tabs of the cylindrical electrode assembly, and the battery cell can be directly connected through the electrode terminals, with no need for the connectors inside the battery cells and the busbars between the battery cells, which reduces the manufacturing cost and effectively reduces the space inside the battery in the direction perpendicular to the end cover of the battery cell.

## BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

FIG. 1 is a schematic structural diagram of a vehicle according to this application;
FIG. 2 is a schematic exploded structural diagram of a battery according to this application;
FIG. 3 is a schematic partial structural diagram of a battery cell according to this application;
FIG. 4 is a schematic structural diagram of a battery cell according to an embodiment of this application;
FIG. 5 is a schematic cross-sectional view of the battery cell in FIG. 4;
FIG. 6 is a schematic structural diagram of another battery cell according to an embodiment of this application;
FIG. 7 is a schematic cross-sectional view of the battery cell in FIG. 6;
FIG. 8 is a schematic structural diagram of a housing according to an embodiment of this application;
FIG. 9 is a schematic top view of a battery according to an embodiment of this application;
FIG. 10 is a schematic cross-sectional view of the battery in FIG. 9;
FIG. 11 is a schematic top view of another battery according to an embodiment of this application;
FIG. 12 is a schematic cross-sectional view of the battery in FIG. 11;
FIG. 13 is a schematic structural diagram of an electric apparatus according to an embodiment of this application;
FIG. 14 is a schematic flowchart of a preparation method of battery cell according to an embodiment of this application; and
FIG. 15 is a schematic structural diagram of a preparation apparatus of battery cell according to an embodiment of this application.

The accompanying drawings are not drawn to scale.

## DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mounting", "connection", and "joining" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of A; presence of both A and B; and presence of B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions.

In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

The battery in this application is a single physical module that includes one or more battery cells for providing electric power. For example, the battery mentioned in this application may include a battery module, a battery pack, or the like. A battery typically includes a box configured to enclose one or more battery cells. The box can prevent liquids or other foreign matter from affecting charging or discharging of the battery cell.

Optionally, the battery cell may include a lithium ion secondary battery, a lithium ion primary battery, a lithium-sulfur battery, a sodium/lithium-ion battery, a sodium ion battery, a magnesium ion battery, or the like. This is not limited in the embodiments of this application. In some implementations, the battery cell may also be referred to as a cell.

The battery cell includes an electrode assembly and an electrolyte. The electrode assembly includes a positive electrode plate, a negative electrode plate, and a separator. The battery cell mainly relies on movement of metal ions between a positive electrode plate and a negative electrode plate to work. The positive electrode plate includes a positive electrode current collector and a positive electrode active substance layer. The positive electrode active substance layer is applied to a surface of the positive electrode current collector, and a current collector uncoated with the positive electrode active substance layer protrudes from the current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied to a surface of the negative electrode current collector. A current collector uncoated with the negative electrode active substance layer protrudes from the current collector coated with the negative electrode active substance layer and serves as a negative electrode tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. A material of the separator may be polypropylene (Polypropylene, PP), polyethylene (Polyethylene, PE), or the like. In addition, the electrode assembly may be a wound structure or a stacked structure, but the embodiments of this application are not limited thereto.

For the development of battery technology, many design factors need to be considered, for example, performance parameters such as energy density, cycle life, discharge capacity, and charge and discharge rate, as well as the stability of installation of the battery in the electric apparatus, so as to enhance the safety of the battery in the electric apparatus.

In some battery packaging technologies, a plurality of battery cells (cell) are first integrated into a battery module (module), and then the battery module is installed in a battery box to form a battery pack (pack). In some other battery packaging technologies, a plurality of battery cells may be directly disposed in the box to form a battery pack, which eliminates an intermediate state of forming the battery module, thereby reducing the mass of the battery pack and increasing the energy density of the battery. This second packaging technology may also be referred to as a cell to pack (cell to pack) packaging technology in the related art, and this battery pack may be simply referred to as a battery in this application.

Conventional battery cells include cylindrical battery cells and square battery cells (for example, blade battery cells). A square battery cell usually has a square housing and electrode assemblies wound into an elliptical column. A plurality of elliptical column electrode assemblies are stacked in the square housing. Positive and negative electrode tabs of the elliptical column electrode assembly are obtained by processing electrode plates through die cutting, and the positive and negative electrode tabs are aligned and arranged at one end of the elliptical column through winding and are respectively connected to the positive and negative electrode terminals at one end of the elliptical column housing. However, in the foregoing battery cell, the electrode assemblies are all stacked, and heights of the stacked electrode assemblies infiltrated by the electrolyte in the battery are obviously different, resulting in different infiltrated states of the electrode assemblies and poor consistency, which is not conducive to the stable electrochemical reaction of the battery. Such stacking arrangement mode also results in relatively large contact area between electrode assemblies and between electrode assemblies and the housing. After one electrode assembly undergoes thermal runaway, heat is easily transferred to another electrode assembly or to another battery cell through the housing, resulting in severe heat diffusion, and triggering thermal runaway of the entire battery. In addition, the electrode assembly expands and deforms in the electrochemical reaction, and the walls of the square housing are usually relatively thin, so additional end plates are needed to improve the strength of the housing to resist the influence of the expansion and deformation of the electrode assembly on the walls of the square housing.

In view of this, this application provides such a technical solution that: cylindrical electrode assemblies are configured in a battery cell with a hexahedral housing, and the cylindrical electrode assemblies are not stacked in the hexahedral housing, such that the contact areas between the cylindrical electrode assemblies and the housing and between the cylindrical electrode assemblies are relatively small, which effectively controls the heat diffusion of the electrode assemblies in a case of thermal runaway, improves the safety performance of the battery cell, and prolongs the service life of the battery. In addition, such design can also make the electrode terminals of the battery cell with the hexahedral housing arranged on two oppositely arranged walls, the electrode terminals inside the battery cell can be directly connected to the tabs of the cylindrical electrode assembly, and the battery cell can be directly connected through the electrode terminals, with no need for the connectors inside the battery cells and the busbars between the battery cells, which reduces the manufacturing cost and effectively reduces the space inside the battery in the direction perpendicular to the end cover of the battery cell.

The technical solutions described in the embodiments of this application are applicable to various apparatuses that use batteries, for example, mobile phones, portable devices, notebook computers, electric bicycles, electric toys, electric tools, electric vehicles, ships, and spacecrafts.

It should be understood that the technical solutions described in the embodiments of this application are applicable to not only the apparatuses described above but also all apparatuses using batteries. However, for brevity of description, in the following embodiments, an electric vehicle is used as an example for description.

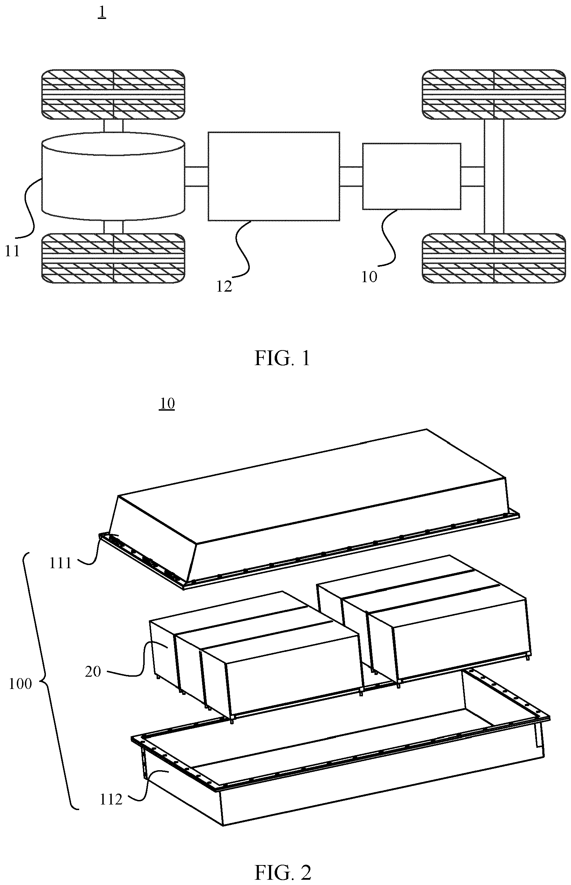

For example, FIG. 1 is a schematic structural diagram of a vehicle 1 according to this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 11, a controller 12, and a battery 10 may be provided inside the vehicle 1, where the controller 12 is configured to control the battery 10 to supply power to the motor 11. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery may include multiple battery cells, and the multiple battery cells may be connected in series, parallel, or series-parallel, where being connected in series-parallel means a combination of series and parallel connections. The battery may also be called a battery pack. Optionally, multiple battery cells may be connected in series, parallel, or series-parallel to form a battery module first, and then multiple battery modules are connected in series, parallel, or series-parallel to form a battery. In a word, the plurality of battery cells may be directly combined into a battery, or may first be combined into battery modules which are then combined into a battery.

For example, FIG. 2 is a schematic structural diagram of a battery 10 according to this application. The battery 10 may include a plurality of battery cells 20. The battery 10 may further include a box 100 (or referred to as a cover), where the box 100 has a hollow structure inside, and the plurality of battery cells 20 are accommodated in the box 100. As shown in FIG. 2, the box 100 may include two portions, which are herein referred to as a first portion 111 and a second portion 112 respectively, and the first portion 111 and the second portion 112 are snap-fitted together. Shapes of the first portion 111 and the second portion 112 may be determined based on a shape in which the plurality of battery cells 20 are combined, and the first portion 111 and the second portion 112 each may have an opening. For example, the first portion 111 and the second portion 112 each may be a hollow cuboid and have only one face with an opening, the opening of the first portion 111 is arranged opposite the opening of the second portion 112, and the first portion 111 and the second portion 112 are snap-fitted to form a box 100 with an enclosed chamber. The plurality of battery cells 20 are connected in parallel, in series, or in series and parallel, and then put into the box 100 formed after the first portion 111 and the second portion 112 are snap-fitted.

Optionally, the battery 10 may further include other structures. Details are not described herein. For example, the battery 10 may further include a busbar, where the busbar is configured to implement an electrical connection between a plurality of battery cells 20, for example, a parallel connection, a series connection, or a series and parallel connection. Specifically, the busbar may implement the electrical connection between the battery cells 20 by connecting electrode terminals of the battery cells 20. Further, the busbar may be fixed to the electrode terminal of the battery cell 20 by welding. Electrical energy of the plurality of battery cells 20 may be further led out through the box 100 by a conductive mechanism. Optionally, the conductive mechanism may also belong to the busbar.

Based on different power demands, the number of battery cells 20 can be set to any value. The plurality of battery cells 20 may be connected in series, in parallel, or in series and parallel to achieve greater capacity or power.

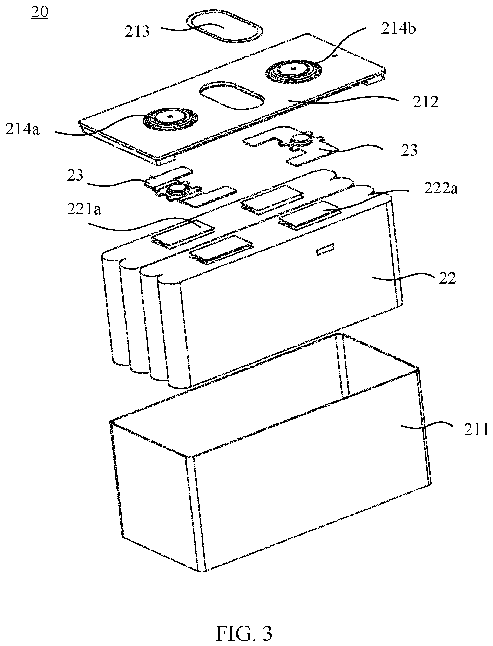

As shown in FIG. 3, FIG. 3 is a schematic structural diagram of the battery cell 20 according to this application. The battery cell 20 includes one or more electrode assemblies 22 and a housing 21, where the housing 21 includes a shell 211 and an end cover 212. A wall of the shell 211 and the end cover 212 are both referred to as the wall of the housing 21. The shell 211 is determined based on a combined shape of the one or more electrode assemblies 22. In an example, the shell 211 shown in FIG. 3 may be a hollow cuboid. The shell 211 has an opening on one face such that the one or more electrode assemblies 22 can be placed inside the shell 211. The end cover 212 covers the opening and is connected to the shell 211 to form an enclosed cavity for accommodating the electrode assembly 22. The shell 211 is filled with an electrolyte such as a liquid electrolyte.

The battery cell 20 may further include two electrode terminals 214, where the two electrode terminals 214 may be arranged on the end cover 212. The end cover 212 is typically in the shape of a flat plate, and the two electrode terminals 214 are fastened on a flat surface of the end cover 212. The two electrode terminals 214 are a positive electrode terminal 214a and a negative electrode terminal 214b. Each electrode terminal 214 is provided with a corresponding connecting member 23 which may also be referred to as a current collection member 23. The connecting member 23 is located between the end cover 212 and the electrode assembly 22 and is configured to electrically connect the electrode assembly 22 to the electrode terminal 214.

As shown in FIG. 3, each electrode assembly 22 has a first tab 221a and a second tab 222a. The first tab 221a and the second tab 222a have opposite polarities. For example, when the first tab 221a is a positive electrode tab, the second tab 222a is a negative electrode tab. The first tabs 221a of the one or more electrode assemblies 22 are connected to one electrode terminal through one connecting member 23, and the second tabs 222a of the one or more electrode assemblies 22 are connected to the other electrode terminal through the other connecting member 23. For example, the positive electrode terminal 214a is connected to the positive electrode tab 221a through one connecting member 23, and the negative electrode terminal 214b is connected to the negative electrode tab 222a through another connecting member 23.

In the battery cell 20, one or more electrode assemblies 22 may be provided depending on an actual need. As shown in FIG. 3, the battery cell 20 is provided with four independent electrode assemblies 22.

In an example, a pressure relief mechanism 213 may be further provided on one of the walls of the battery cell 20. The pressure relief mechanism 213 is configured to actuate the internal pressure or temperature of the battery cell 20 when the internal pressure or temperature reaches a threshold so as to relieve the internal pressure or temperature.

Based on the battery and the structure of the battery cell, this embodiment provides a battery cell, which can reduce the heat diffusion of the electrode assembly in a case of thermal runaway, improve the safety of the battery cell, and prolong the service life of the battery.

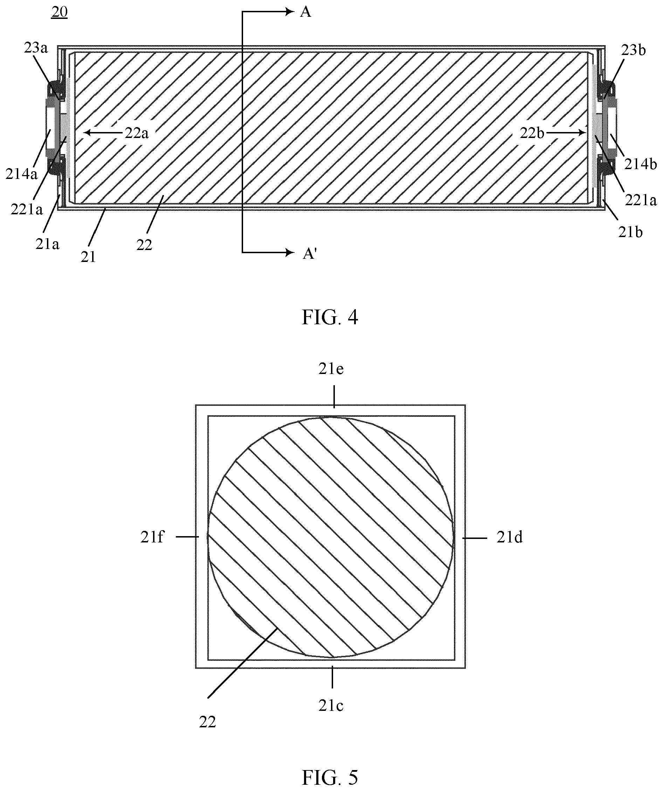

FIG. 4 is a schematic structural diagram of a battery cell 20 according to an embodiment of this application. As shown in FIG. 4, the battery cell 20 includes:

a hexahedral housing 21, where the hexahedral housing 21 has a first wall 21a and a second wall 21b oppositely arranged, the first wall 21a is provided with a positive electrode terminal 214a, and the second wall 21b is provided with a negative electrode terminal 214b; and

a cylindrical electrode assembly 22 arranged in the housing 21, where the axial direction of the cylindrical electrode assembly 22 is perpendicular to the first wall 21a or the second wall 21b, a positive electrode tab 221a of the cylindrical electrode assembly 22 is arranged at a first end 22a of the cylindrical electrode assembly 22 and connected to the positive electrode terminal 214a; and a negative electrode tab 222a of the cylindrical electrode assembly 22 is arranged at a second end 22b of the cylindrical electrode assembly 22 and connected to the negative electrode terminal 214b.

It should be understood that the hexahedral housing 21 includes six walls: 21a, 21b, 21c, 21d, 21e, and 21f, where the six walls may be divided into adjacently arranged walls and oppositely arranged walls. Adjacent walls are, for example, the first wall 21a and the third wall 21c, and oppositely arranged walls are, for example, the first wall 21a and the second wall 21b. For example, in the hexahedral housing 21, if two oppositely arranged walls (for example, the first wall 21a and the second wall 21c) are a top wall and a bottom wall of the hexahedron, the remaining four walls (for example, the third wall 21c, the fourth wall 21d, the fifth wall 21e, and the sixth wall 21f) are side walls of the hexahedron. Preferably, two adjacent walls in the hexahedral housing 21 are perpendicular to each other.

Specifically, the electrode assembly 22 is wound into a cylindrical structure and arranged in the hexahedral housing 21, and the tabs 221a and 222a of the electrode assembly 22 are located at the two ends of the cylinder, respectively, and are respectively connected to the electrode terminals 214a and 214b on the first wall 21a and the second wall 21b oppositely arranged on the hexahedral housing.

FIG. 5 is a cross-sectional view of the battery cell 20 in FIG. 4 along direction A-A'. Preferably, in an embodiment, as shown in FIG. 5, the cylindrical electrode assembly 22 is tangent to four walls (21c, 21d, 21e, 21f) of the hexahedral housing 21 that are parallel to the axial direction of the cylinder.

In the technical solution of this embodiment, the cylindrical electrode assembly 22 is assembled in the hexahedral housing 21 to obtain the battery cell 20. The positive electrode tab 221a and the negative electrode tab 222a of the cylindrical electrode assembly 22 are first respectively connected to the positive electrode terminal 214a and the negative electrode terminal 214b on the two oppositely arranged walls 21a and 21b of the hexahedral housing 21, such that the positive electrode and the negative electrode of the hexahedral-shaped battery cell 20 can be led out from the first wall 21a and second wall 21b oppositely arranged, and such arrangement of the hexahedral housing 21 and the cylindrical electrode assembly 22 reduces the contact area between the electrode assembly 22 and the housing 21. Under the condition that the electrode assembly 22 undergoes thermal runaway, the heat transfer between the electrode assembly 22 and the housing 21 depends on only a position where the cylinder is tangent to the hexahedron, which reduces the heat diffusion of the electrode assembly 22, thereby reducing the possibility of thermal runaway of one battery cell 20 triggering thermal runaway of the plurality of battery cells 20, improving the safety performance of the battery cells 20, and prolonging the service life of the battery 10. The tabs 221a and 222a of the cylindrical electrode assembly 22 are then respectively connected to the electrode terminals 214 on the oppositely arranged first wall 21a and second wall 21b at the two ends (22a and 22b) of the cylinder, with no need to wind the tabs 221a and 222a around other walls, thereby improving the internal space utilization of the battery cell 20. In addition, the tabs 221a and 222a of the cylindrical electrode assembly 22 are arranged at the two ends (22a and 22b) of the cylinder, so there is no need for die cutting and winding alignment during processing, which effectively improves the production efficiency of the battery cell 20 and reduces the manufacturing cost. In addition to accommodating the cylindrical electrode assembly 22, the hexahedral housing 21 also has remaining space, which can store the gas generated by the electrode assembly 22 in the electrochemical reaction, preventing the gas from causing bulges or damage to the battery cells 20 and in turn causing safety problems, and improving the safety performance of the battery cell 20.

Optionally, as shown in FIG. 4, in an embodiment, the positive electrode tab 221a is connected to the positive electrode terminal 214a through a first connector 23a, and the negative electrode tab 222a is connected to the negative electrode terminal 214b through a second connector 23b.

In this embodiment, the tabs 221a and 222a are connected to the electrode terminals 214 through the connectors 23. The connectors 23 can electrically connect the tabs 221a and 222a to the electrode terminals 214a and 214b with no need of welding, which facilitates the production and processing of the battery cell 20. Moreover, the positive electrode tab 221a and the negative electrode tab 222a of the cylindrical electrode assembly 22 are respectively arranged at the two ends 22a and 22b of the cylinder, and the electrode terminals 214a and 214b are also respectively arranged on the two oppositely arranged walls 21a and 21b of the hexahedral housing 21, which shortens the transfer distance of the connectors 23, thereby reducing the space occupied by the connectors 23 and improving the internal space utilization of the battery cell 20.

Optionally, in an embodiment, the positive electrode tab 221a is directly connected to the positive electrode terminal 214a, and the negative electrode tab 222a is directly connected to the negative electrode terminal 214b.

Specifically, the positive electrode tab 221a and the negative electrode tab 222a can form connection regions at the two ends of the cylindrical electrode assembly 22 through a process such as flattening or leveling, and the connection regions are directly connected, to be specific, the electrode tabs 221a and 222a are electrically connected to the electrode terminals 214a and 214b through welding, riveting, and the like.

In this embodiment, avoiding the use of the connector 23 further reduces the space occupied by the connector 23 inside the battery cell 20, and further improves the internal space utilization of the battery cell 20.

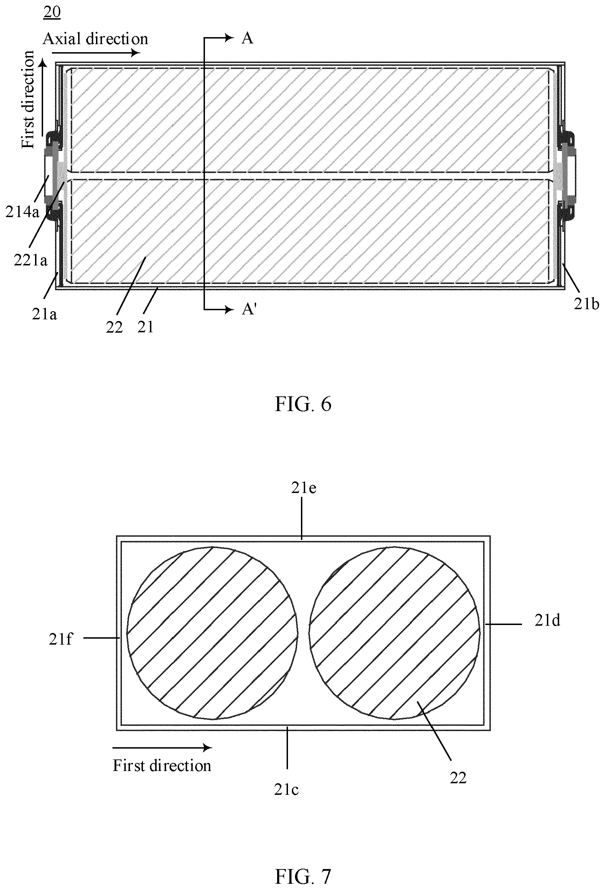

FIG. 6 is another schematic structural diagram of the battery cell 20 according to this application. FIG. 7 is a cross-sectional view of the battery cell 20 in FIG. 6 along direction A-A'.

Optionally, as shown in FIG. 6, in an embodiment, the battery cell 20 includes a plurality of cylindrical electrode assemblies 22, where the plurality of cylindrical electrode assemblies 22 are arranged in parallel in the hexahedral housing 21 along a first direction, and the first direction is parallel to the first wall 21a.

Specifically, under the condition that the plurality of cylindrical electrode assemblies 22 are arranged in the hexahedral housing 21, the plurality of cylindrical electrode assemblies 22 are arranged in parallel along the direction parallel to the first wall 21a or second wall 21b. The plurality of positive electrode tabs 221a of the plurality of cylindrical electrode assemblies 22 may be connected to the positive electrode terminals 214a respectively, or may form into a whole through a process such as flattening to be connected to the positive electrode terminals 214a. The same goes for the negative electrode tabs. Preferably, one battery cell 20 includes one to five electrode assemblies 22.

In this embodiment, the plurality of cylindrical electrode assemblies 22 are not stacked and are placed in parallel in the housing 21, such that the cylindrical electrode assemblies 22 are relatively consistently infiltrated in the electrolyte under the condition that the cylindrical electrode assemblies 22 are placed with their axes parallel to the horizontal plane, which improves the consistency of the electrode assemblies 22, thereby improving the electrochemical performance of the battery cell 20. In addition, the plurality of electrode assemblies 22 are arranged in parallel, such that the contact areas between the cylindrical electrode assemblies 22 and between each cylindrical electrode assembly 22 and the housing 21 are all relatively small. Therefore, under the condition that one electrode assembly 22 undergoes thermal runaway, the heat diffusion is relatively small and the heat is not easy to transfer from one electrode assembly 22 to another electrode assembly 22, which causes thermal runaway of the battery cell 20, improving the safety performance of the battery cell 20, and prolonging the service life of the battery 10.

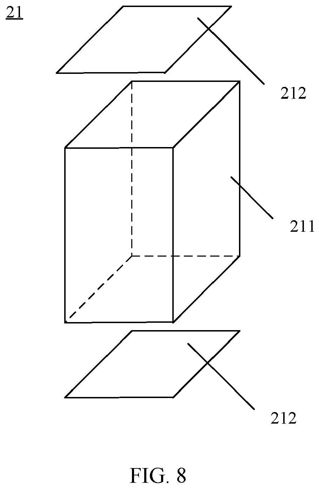

Optionally, in an embodiment, as shown in FIG. 8, the housing 21 includes a shell 211 and an end cover 212, where the shell 21 has at least one opening, the end cover 212 covers the opening, and the first wall 21a and/or the second wall 21b is the end cover 212.

For example, if the first wall 21a is the end cover 212, during the processing, the second wall 21b, the third wall 21c, the fourth wall 21d, the fifth wall 21e, and the sixth wall 21f of the hexahedral housing are processed into a hollow hexahedral structure with an opening, to be specific, the shell 211 has five walls, the first wall 21a can cover the opening to form the housing 21, and the opening can enable the electrode assembly to be installed in the housing and provide an operating space for the processing of the end cover and the electrode assembly. The electrode assembly 22 is installed into the shell 211 from the opening, and is electrically connected to the first wall 21a through conventional processing methods at the opening. The electrode assembly 22 is electrically connected to the second wall 21b through penetration welding or other penetration processing methods.

Preferably, the first wall 21a and the second wall 21b are both the end covers 212, and are arranged at the two ends of the shell 21.

Specifically, during the processing, the third wall 21c, the fourth wall 21d, the fifth wall 21e, and the sixth wall 21f of the hexahedral housing are processed into four side walls of a hollow hexahedral structure to form the shell 211, and the first wall 21a and the second wall 21b are both the end covers 212 for covering the opening of the shell 211 to form the housing 21.

In this embodiment, the housing 21 has two oppositely arranged end covers 212, and the positive and negative electrodes of the hexahedral-shaped battery cell 20 are led out from two oppositely arranged surfaces, which can directly connect the electrode terminals 214 of the battery cell 20 in a direction perpendicular to the end covers 212, with no need for busbar, thereby reducing the space for assembling the battery cell 20 in the direction perpendicular to the end covers 212, and the shell 211 has two openings, which is more convenient for processing the battery cell, and helps to improve the internal space utilization of the battery 10.

Optionally, in an embodiment, the shell 211 includes a side wall and a bottom wall, where the side wall and the bottom wall are arranged adjacent to each other, and the bottom wall is a wall with a largest area of the shell 211.

For example, as shown in FIG. 5 or FIG. 7, the four walls constructing the shell 211 include two side walls 21c and 21e, one bottom wall 21d, and one top wall 21e. The bottom wall 21d has the same area as the top wall 21e and is the wall with a largest area in the shell 211.

In this embodiment, the wall with the largest area in the shell 211 of the battery cell 21 is the bottom wall 21d, in other words, the battery cell 21 is assembled in the battery 10 in a flat mode, and under such arrangement state, the axial direction of the cylindrical electrode assembly 22 is parallel to the bottom wall 21d, that is, the axial direction of the cylindrical electrode assembly 22 is parallel to the horizontal plane. Under the condition that a plurality of cylindrical electrode assemblies 22 exist, the electrode assemblies 22 are arranged in parallel without stacking, which helps to improve the consistency of the electrode assemblies 22.

Optionally, in an embodiment, the cylindrical electrode assembly 22 includes a positive electrode plate, a negative electrode plate, and a spacer structure arranged between the positive electrode plate and the negative electrode plate, where the spacer structure is configured to construct a spacer between the positive electrode plate and the negative electrode plate, and the spacer is configured to absorb expansion deformation of the cylindrical electrode assembly 22.

Specifically, the spacer structure may be constructed by a structure on the electrode plate or separator, such that there is a reserved space inside the electrode assembly 22 wound into a cylindrical shape; or may be constructed by another structural provided on the electrode plate or separator. For example, the spacer structure may be constructed between the positive electrode plate and the negative electrode plate by imprinting a pattern (pattern), such as bumps or pits, on the electrode plate or separator, and at this time, the spacer structure is a portion of the electrode plate or separator. For another example, the spacer structure can be constructed by brushing polysilacarbosilane (Polysilacarbosilane, PCS) on the electrode plate or separator.

In this embodiment, the spacer structure is arranged between the electrode plates of the cylindrical electrode assembly 22, and the spacer structure can form a reserved space between the electrode plates in the process of winding the electrode plates into the cylindrical electrode assembly 22. Therefore, after the electrode assembly 22 expands and deforms in the electrochemical reaction, the reserved space can accommodate the expansion of the electrode assembly 22, such that the cylindrical electrode assembly 22 can expand inward, which reduces the degree of outward expansion of the electrode assembly 22 and reduces the influence of the expansion and deformation of the electrode assembly 22 on the shell 211. In this way, there is no need to use any additional end plates on the bottom wall 21d and top wall 21e of the shell 211 to enhance the strength of the battery cell 20, thereby reducing the manufacturing cost of the battery cell 20 while improving the stability and safety of the battery cell 20.

Optionally, in an embodiment, length h of the shell 211 in the axial direction and length t of the shell in a second direction satisfy the following formula:

$$h = n \times t'$$

where n is the number of cylindrical electrode assemblies 22, n≥1, t'=t+/-20 mm, and the second direction is perpendicular to the axial direction and the first direction.

Specifically, the second direction is a direction perpendicular to the bottom wall 21d. In this embodiment, configuring parameters of the shell can reserve a part of space for the cylindrical electrode assembly 22 in the hexahedral housing 21, which further reduces the influence of the expansion and deformation of the electrode assembly 22 on the housing 21.

Optionally, in an embodiment, diameter D of the cylindrical electrode assembly 22 satisfies the following formula:

$$D = t - c1$$

where t is the length of the shell 211 in the second direction, 0.01 mm≤c1≤5 mm, and preferably 0.8 mm≤c1≤2 mm.

Optionally, in an embodiment, the length of the shell 21 in the first direction is 150 mm to 1200 mm, and preferably 280 mm to 450 mm.

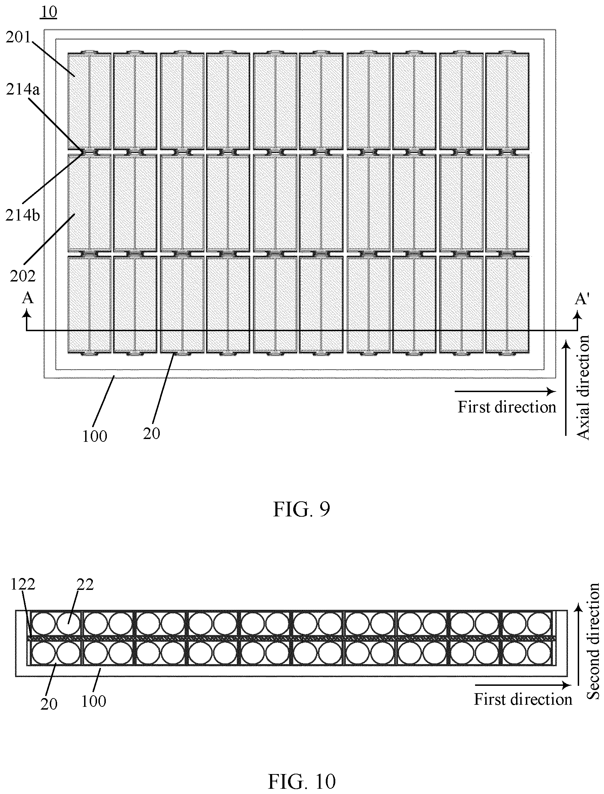

The battery cell 20 in the embodiments of this application is described above with reference to FIG. 4 to FIG. 8, and the arrangement of a plurality of battery cells 20 in the box 100 in the battery 10 of the embodiments of this application is described below with reference to FIG. 9 to FIG. 12.

FIG. 9 is a schematic top view of a battery 10 according to this application. FIG. 10 is a schematic cross-sectional view of the battery 10 in FIG. 9 along direction A-A'.

The battery 10 includes a plurality of battery cells 20 and a box 100, where the box 100 is configured to accommodate the plurality of battery cells 20.

In this embodiment, the battery 10 is assembled from battery cells 20 that can reduce heat diffusion and improve safety performance, which helps to avoid heat diffusion of the battery 10 and improve safety performance of the battery 10.

Optionally, a first battery cell 201 and a second battery cell 202 in the plurality of battery cells 20 are arranged in the box 100 along the axial direction, and a negative electrode terminal 214b of the first battery cell 201 is connected to a positive electrode terminal 214a of the second battery cell 202.

In other words, the plurality of battery cells 20 are arranged in columns in the axial direction and in rows in a first direction in the box 100. In the axial direction, the negative electrode terminal 214b of the first battery cell 201 is connected to the positive electrode terminal 214a of the second battery cell 202. To be specific, a plurality of rows of battery cells 20 are assembled in the axial direction by directly connecting the electrode terminals 214. In the first direction perpendicular to the axial direction, the assembly of the plurality of rows of battery cells 20 is realized through the connection of busbars.

In this embodiment, because the positive and negative electrode terminals 214a and 214b of the hexahedral-shaped battery cell 20 are located on the two oppositely arranged end covers 21a and 21b, the battery cells 20 in the battery 10 can be directly connected to the electrode terminals 214 along the axial direction, which eliminates the busbars between the battery cells 20 in the axial direction and improves the internal space utilization of the battery 10.

Optionally, as shown in FIG. 9, in an embodiment, the number of rows of the plurality of battery cells 20 arranged in the axial direction is less than the number of columns of the plurality of battery cells 20 arranged in the first direction.

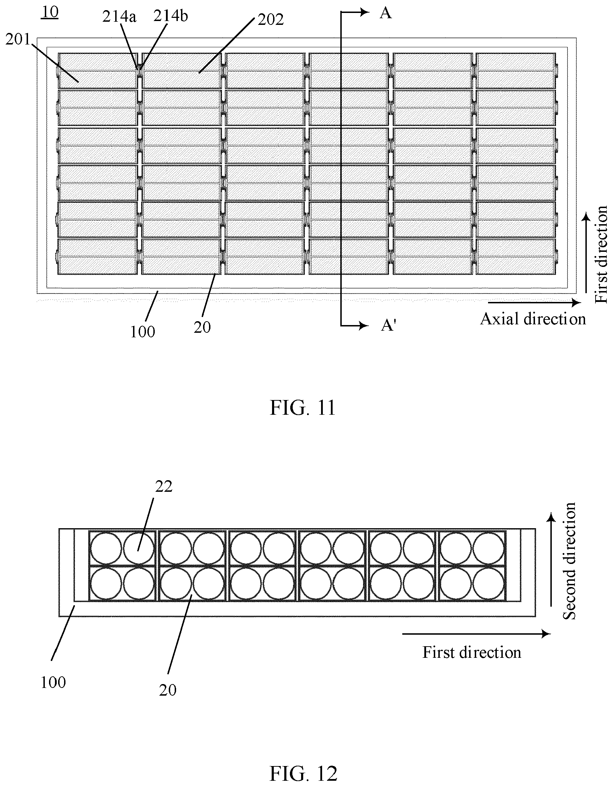

FIG. 11 is another schematic top view of a battery 10 according to this application. FIG. 12 is a schematic cross-sectional view of the battery 10 in FIG. 11 along direction A-A'.

In an alternative embodiment, as shown in FIG. 11, the number of rows of the plurality of battery cells 20 arranged in the axial direction is greater than or equal to the number of columns of the plurality of battery cells 20 arranged in the first direction.

Optionally, the first battery cell 201 and the second battery cell 202 in the plurality of battery cells 20 are arranged in the box 100 along a second direction, where the second direction is perpendicular to the axis direction and the first direction.

Specifically, referring to FIG. 10 and FIG. 12, the battery 10 includes a plurality of layers of battery cells 20 in the second direction. Preferably, the battery 10 includes two layers of battery cells 20 in the second direction. It should be understood that the plurality of battery cells in the box may have both the arrangement in the axial direction and the arrangement in the second direction, or may have only one of them, which is not limited in the embodiments of this application. In addition, the bottom wall 21d of the first battery cell 201 and the top wall 21e of the second battery cell 202 may be in direct contact with each other, or structural adhesive, thermal insulation pads, or the like may be directly provided on the bottom wall 21d of the first battery cell 201 and the top wall 21e of the second battery cell 202.

In the technical solution of this embodiment, the battery cells are arranged in the second direction, that is, the plurality of battery cells are stacked with each other through the wall with the largest area, such that more battery cells can be accommodated in the battery, improving the internal space utilization of the battery.

Optionally, in an embodiment, the battery 10 includes a water cooling plate 122 arranged inside the box 100 and attached to a third wall 21c of the battery cell 20, where the third wall 21c is parallel to the axial direction and connected to the first wall 21a and the second wall 21b.

It should be understood that the third wall 21c may be the top wall or the bottom wall of the shell 211 or a side wall of the shell 211. Preferably, the water cooling plate 122 is attached to the top wall or the bottom wall of the shell 211, that is, the wall with a largest area. When the battery 10 includes a plurality of layers of battery cells 20 in the second direction as shown in FIG. 10 or FIG. 12, the water cooling plate 122 is arranged between the layers of the battery cells 20.

In this embodiment, arranging the water cooling plate 122 in the battery 10 further reduces the heat diffusion caused by thermal runaway, and increasing the contact area between the water cooling plate 211 and the battery cell 20 improves the cooling effect of the water cooling plate 122 on the battery 10, so as to avoid the safety problems caused by an excessively high temperature of the battery cell 20 and help improve the safety performance and service life of the battery 10.

Optionally, in an embodiment, length H of the box 100 in the second direction satisfies the following formula:

$$H-c=m\times t$$

where m is the number of layers of the plurality of battery cells 20 arranged along the second direction, t is the length of the shell in the second direction, 10 mm≤c≤40 mm, and 1≤m. Preferably, 15 mm≤c≤25 mm and 2≤m≤8.

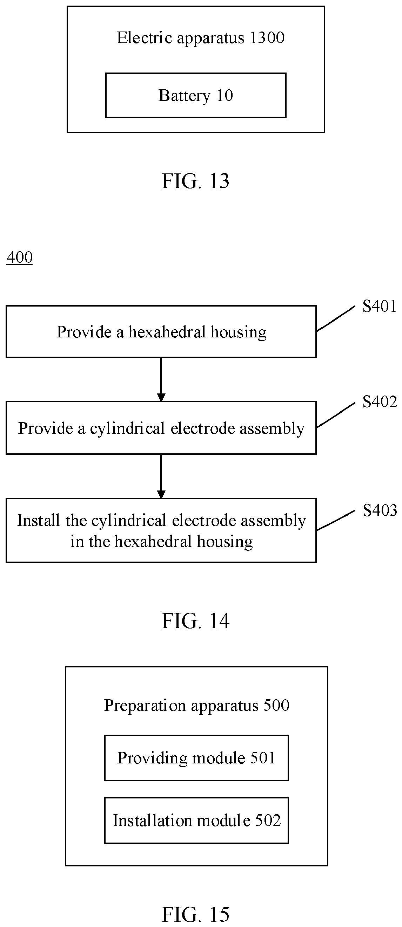

As shown in FIG. 13, an embodiment of this application further provides an electric apparatus 1300, where the electric apparatus 1300 may include the battery 10 in the foregoing embodiments, and the battery 10 is configured to supply electrical energy to the electric apparatus 1300.

Optionally, the electric apparatus 1300 can be a vehicle 1, a ship, or a spacecraft.

The foregoing describes the battery cell 20, the battery 10, and the electric apparatus 1300 in the embodiments of this application; and the following describes a method and device for manufacturing a battery cell 20 in the embodiments of this application. For those not described in detail, refer to the foregoing embodiments.

FIG. 14 is a schematic flowchart of a method 300 for manufacturing battery cell 20 according to an embodiment of this application. As shown in FIG. 14, the method 400 may include the following steps.

S401: Provide a hexahedral housing 21, where the hexahedral housing 21 has a first wall 21a and a second wall 21b oppositely arranged, the first wall 21a is provided with a positive electrode terminal 214a, and the second wall 21b is provided with a negative electrode terminal 214b.

S402: Provide a cylindrical electrode assembly 22, where the cylindrical electrode assembly 22 is arranged in the housing 21, the axial direction of the cylindrical electrode assembly 22 is perpendicular to the first wall 21a or the second wall 21b, a positive electrode tab 221a of the cylindrical electrode assembly 22 is arranged at a first end 22a of the cylindrical electrode assembly 22 and connected to the positive electrode terminal 214a; and a negative electrode tab 222a of the cylindrical electrode assembly 22 is arranged at a second end 22b of the cylindrical electrode assembly 22 and connected to the negative electrode terminal 214b.

S403: Install the cylindrical electrode assembly 22 in the hexahedral housing 21.

FIG. 15 is a schematic block diagram of a preparation apparatus 500 of battery cell 20 according to an embodiment of this application. As shown in FIG. 15, the preparation apparatus 500 of battery may include: a providing module 501 and an installation module 502.

The providing module 501 is configured to: provide a hexahedral housing 21, where the housing 21 has a first wall 21a and a second wall 21b oppositely arranged, the first wall 21a is provided with a positive electrode terminal 214a, and the second wall 21b is provided with a negative electrode terminal 214b; and provide a cylindrical electrode assembly 22, where the cylindrical electrode assembly 22 is arranged in the housing 21, the axial direction of the cylindrical electrode assembly 22 is perpendicular to the first wall 21a or the second wall 21b, a positive electrode tab 221a of the cylindrical electrode assembly 22 is arranged at a first end 22a of the cylindrical electrode assembly 22 and connected to the positive electrode terminal 214a; and a negative electrode tab 222a of the cylindrical electrode assembly 22 is arranged at a second end 22b of the cylindrical electrode assembly 22 and connected to the negative electrode terminal 214b.

The installation module 502 is configured to install the cylindrical electrode assembly 22 in the hexahedral housing 21.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1.  A battery cell, **characterized in that** the battery cell comprises:

    a hexahedral housing, wherein the hexahedral housing has a first wall and a second wall oppositely arranged, the first wall is provided with a positive electrode terminal, and the second wall is provided with a negative electrode terminal; and
    a cylindrical electrode assembly, wherein the cylindrical electrode assembly is arranged in the housing, the axial direction of the cylindrical electrode assembly is perpendicular to the first wall or the second wall, a positive electrode tab of the cylindrical electrode assembly is arranged at a first end of the cylindrical electrode assembly and connected to the positive electrode terminal, and a negative electrode tab of the cylindrical electrode assembly is arranged at a second end of the cylindrical electrode assembly and connected to the negative electrode terminal.

2.  The battery cell according to claim 1, **characterized in that** the positive electrode tab is connected to the positive electrode terminal through a first connector, and the negative electrode tab is connected to the negative electrode terminal through a second connector.

3.  The battery cell according to claim 1, **characterized in that** the battery cell comprises a plurality of cylindrical electrode assemblies, wherein the plurality of cylindrical electrode assemblies are arranged in parallel in the hexahedral housing along a first direction, and the first direction is parallel to the first wall.

4.  The battery cell according to claim 3, **characterized in that** the housing comprises a shell and an end cover, wherein the shell has at least one opening, the end cover covers the opening, and the first wall and/or the second wall is the end cover.

5.  The battery cell according to claim 4, **characterized in that** the shell comprises a side wall and a bottom wall, wherein the side wall and the bottom wall are arranged adjacent to each other, and the bottom wall is a wall with a largest area of the shell.

6.  The battery cell according to any one of claims 1 to 5, **characterized in that** the cylindrical electrode assembly comprises a positive electrode plate, a negative electrode plate, and a spacer structure arranged between the positive electrode plate and the negative electrode plate, wherein the spacer structure is configured to construct a spacer between the positive electrode plate and the negative electrode plate, and the spacer is configured to absorb expansion deformation of the cylindrical electrode assembly.

7.  The battery cell according to claim 4 or 5, **characterized in that** length h of the shell in the axial direction and length t of the shell in a second direction satisfy the following formula:

    $$h = n \times t'$$

    wherein n is the number of cylindrical electrode assemblies, $n \geq 1$, $t' = t +/- 20$ mm, and the second direction is perpendicular to the axial direction and the first direction.

8.  The battery cell according to claim 7, **characterized in that** diameter D of the cylindrical electrode assembly satisfies the following formula:

    $$D = t - c1$$

    wherein t is the length of the shell in the second direction, and $0.01$ mm $\leq c1 \leq 5$ mm.

9.  The battery cell according to any one of claims 3 to 8, **characterized in that** the length of the shell in the first direction is 150 mm to 1200 mm.

10. A battery, **characterized by** comprising:

    a plurality of the battery cells according to any one of claims 1 to 9; and
    a box configured to accommodate the plurality of battery cells.

11. The battery according to claim 10, **characterized in that** a first battery cell and a second battery cell in the plurality of battery cells are arranged in the box along the axial direction, and a negative electrode terminal of the first battery cell is connected to a positive electrode terminal of the second battery cell.

12. The battery according to claim 10, **characterized in that** a first battery cell and a second battery cell in the plurality of battery cells are arranged in the box along the second direction.

13. The battery according to claim 10, **characterized in that** the battery comprises:
    a water cooling plate arranged inside the box and attached to a third wall of the battery cell, wherein the third wall is parallel to the axial direction and connected to the first wall and the second wall.

**14.** The battery according to claim 12, **characterized in that** length H of the box in the second direction satisfies the following formula:

$$H-c=m \times t$$

wherein m is the number of layers of the plurality of battery cells arranged along the second direction, t is the length of the shell in the second direction, 10 mm≤c≤40 mm, and 1≤m≤8.

**15.** An electric apparatus, **characterized by** comprising the battery according to any one of claims 10 to 14, wherein the battery is configured to supply power to the electric apparatus.

**16.** A preparation method of battery cell, **characterized by** comprising:

providing a hexahedral housing, wherein the hexahedral housing has a first wall and a second wall oppositely arranged, the first wall is provided with a positive electrode terminal, and the second wall is provided with a negative electrode terminal;

providing a cylindrical electrode assembly, wherein the cylindrical electrode assembly is arranged in the housing, the axial direction of the cylindrical electrode assembly is perpendicular to the first wall or the second wall, a positive electrode tab of the cylindrical electrode assembly is arranged at a first end of the cylindrical electrode assembly and connected to the positive electrode terminal, and a negative electrode tab of the cylindrical electrode assembly is arranged at a second end of the cylindrical electrode assembly and connected to the negative electrode terminal; and

installing the cylindrical electrode assembly in the hexahedral housing.

**17.** A preparation apparatus of battery cell, **characterized by** comprising:

a providing module configured to: provide a hexahedral housing, wherein the hexahedral housing has a first wall and a second wall oppositely arranged, the first wall is provided with a positive electrode terminal, and the second wall is provided with a negative electrode terminal; and provide a cylindrical electrode assembly, wherein the cylindrical electrode assembly is arranged in the housing, the axial direction of the cylindrical electrode assembly is perpendicular to the first wall or the second wall, a positive electrode tab of the cylindrical electrode assembly is arranged at a first end of the cylindrical electrode assembly and connected to the positive electrode terminal, and a negative electrode tab of the cylindrical electrode assembly is arranged at a second end of the cylindrical electrode assembly and connected to the negative electrode terminal; and

an installation module configured to install the cylindrical electrode assembly in the hexahedral housing.

1

FIG. 1

10

FIG. 2

FIG. 3

FIG. 4

FIG. 5

FIG. 6

FIG. 7

FIG. 8

FIG. 9

FIG. 10

FIG. 11

FIG. 12

Electric apparatus 1300

Battery 10

FIG. 13

400

Provide a hexahedral housing ⟋ S401

Provide a cylindrical electrode assembly ⟋ S402

Install the cylindrical electrode assembly in the hexahedral housing ⟋ S403

FIG. 14

Preparation apparatus 500

Providing module 501

Installation module 502

FIG. 15

## INTERNATIONAL SEARCH REPORT

| International application No. |
| --- |
| **PCT/CN2021/132869** |

**A. CLASSIFICATION OF SUBJECT MATTER**

H01M 50/102(2021.01)i;  H01M 50/172(2021.01)n;  H01M 50/204(2021.01)n;  H01M 10/613(2014.01)n

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI; EPODOC; CNPAT; CNKI; IEEE: 电池, 电芯, 单体, 电极体, 电极组件, 果冻卷, 卷绕, 膨胀, 圆, 壳, 方形, 方型, 矩形, 矩型, 六面体, 棱柱, 冷却, 降温, 热交换, 温度控制, battery, cell, electrode, assembly, stack, jelly 1w roll, wound, expand+, round, shell, case, housing, square, rectangle, hexahedral, prismatic, cool+, thermal, heat, exchang+, control

**C. DOCUMENTS CONSIDERED TO BE RELEVANT**

| Category* | Citation of document, with indication, where appropriate, of the relevant passages | Relevant to claim No. |
| --- | --- | --- |
| X | CN 201438490 U (TIANJIN EV ENERGIES CO., LTD.) 14 April 2010 (2010-04-14) description, paragraphs 28-54, and figures 2-5 | 1-5, 9, 16, 17 |
| Y | CN 201438490 U (TIANJIN EV ENERGIES CO., LTD.) 14 April 2010 (2010-04-14) description, paragraphs 28-54, and figures 2-5 | 6, 10-15 |
| Y | JP 2008016210 A (SONY CORP.) 24 January 2008 (2008-01-24) description, paragraphs 29-53, and figures 1-3 | 6 |
| Y | CN 111834700 A (SHANDONG UNIVERSITY) 27 October 2020 (2020-10-27) description, paragraphs 69-103, and figures 1-9 | 10-15 |
| A | CN 202127067 U (ZHUHAI VAPEX ELECTRICAL TECHNOLOGY CO., LTD.) 25 January 2012 (2012-01-25) entire document | 1-17 |
| A | CN 113097659 A (SUNWODA ELECTRIC VEHICLE BATTERY CO., LTD.) 09 July 2021 (2021-07-09) entire document | 1-17 |
| A | CN 101689617 A (PANASONIC CORP.) 31 March 2010 (2010-03-31) entire document | 1-17 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 July 2022** | **27 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/132869**

**C. DOCUMENTS CONSIDERED TO BE RELEVANT**

| Category* | Citation of document, with indication, where appropriate, of the relevant passages | Relevant to claim No. |
|---|---|---|
| A | JP 2003308873 A (SONY CORP.) 31 October 2003 (2003-10-31)<br>entire document | 1-17 |
| A | JP 2008235049 A (SONY CORP.) 02 October 2008 (2008-10-02)<br>entire document | 1-17 |

**INTERNATIONAL SEARCH REPORT**
**Information on patent family members**

International application No.

**PCT/CN2021/132869**

| Patent document cited in search report | | | Publication date (day/month/year) | Patent family member(s) | | | Publication date (day/month/year) |
|---|---|---|---|---|---|---|---|
| CN | 201438490 | U | 14 April 2010 | US | 2011165444 | A1 | 07 July 2011 |
| | | | | WO | 2010124635 | A1 | 04 November 2010 |
| | | | | KR | 20110000950 | U | 27 January 2011 |
| | | | | JP | 3168282 | U | 09 June 2011 |
| JP | 2008016210 | A | 24 January 2008 | JP | 5066849 | B2 | 07 November 2012 |
| CN | 111834700 | A | 27 October 2020 | CN | 111834700 | B | 24 September 2021 |
| CN | 202127067 | U | 25 January 2012 | | None | | |
| CN | 113097659 | A | 09 July 2021 | CN | 214957266 | U | 30 November 2021 |
| CN | 101689617 | A | 31 March 2010 | US | 2010183910 | A1 | 22 July 2010 |
| | | | | JP | 2009021223 | A | 29 January 2009 |
| | | | | KR | 20100029826 | A | 17 March 2010 |
| | | | | WO | 2008152803 | A1 | 18 December 2008 |
| JP | 2003308873 | A | 31 October 2003 | KR | 20030079773 | A | 10 October 2003 |
| | | | | US | 2006121341 | A1 | 08 June 2006 |
| JP | 2008235049 | A | 02 October 2008 | | None | | |

Form PCT/ISA/210 (patent family annex) (January 2015)